# EUROPEAN PATENT SPECIFICATION

(11) **EP 3 076 750 B1**
(45) Date of publication and mention of the grant of the patent: **12.07.2023**
(21) Application number: 16162912.6
(22) Date of filing: 30.03.2016
(51) Int. Cl.: H04W 4/02, H04W 12/06, H04W 4/029, H04W 88/08, H04W 4/024

(54) **SYSTEM FOR THE DISTRIBUTION OF WIRELESS SIGNALS IN TELECOMMUNICATION NETWORKS**
SYSTEM ZUR VERTEILUNG VON DRAHTLOSEN SIGNALEN IN TELEKOMMUNIKATIONSNETZWERKEN
SYSTÈME POUR LA DISTRIBUTION DE SIGNAUX SANS FIL DANS DES RÉSEAUX DE TÉLÉCOMMUNICATION

(30) Priority: 30.03.2015 US 201562140027 P
(43) Date of publication of application: 05.10.2016
(73) Proprietor: JMA Wireless B.V., 1101 CM Amsterdam Zuidoost (NL)
(72) Inventor: LANDRY, Todd Edward, Grayslake, Illinois, 60030 (US); NOTARGIACOMO, Massimo, 1101 Amsterdam Zuidoost (NL); ORLANDINI, Roberto, 1101 Amsterdam Zuidoost (NL); CHIURCO, Giovanni, 1101 Amsterdam Zuidoost (NL)
(74) Representative: Grana, Daniele

(56) References cited:
- WO-A1-2014/048919
- US-A1- 2009 149 221
- US-A1- 2010 296 816
- US-A1- 2014 031 049
- US-A1- 2014 094 157
- US-A1- 2014 243 033

## Description

### Technical Field

The present invention relates to a system for the distribution of wireless signals in telecommunication networks, particularly for providing a baseband unit (BBU) functionally integrated with a distributed antenna system (DAS).

### Background Art

Demands for end-user cellular mobile performance, also known as Mobile Broadband (MBB), are expected to increase by factors of 1000 over the next five years with MBB connections expected to reach nearly six billion by the year 2020.

These demands will be largely centered on areas where there are high-densities of people, especially of an affluent enough nature that they are utilizing the latest in mobile devices (smartphones++ and similar user equipment).

In addition to humans, an influx of embedded LTE radios within a wide array of machines and personal devices (cars, appliances, etc.) will further increase the demands. This outgrowth is known as Internet of Things (IoT) or Machine to Machine (M2M) and is anticipated to fifteen billion connected devices on the global networks by 2020.

Bandwidth-consuming applications, including video communications and streaming of broadcast quality video, will push the demand for bits-per-second on a per user basis. As a result, the utilization of available, shared spectrum is critical, requiring a higher quantity of smaller-sized cells that can support larger quantities of users while delivering increases in each user's performance.

Small Cell technology set out to achieve something similar.

However, the nature of most small cells is such that they tend to create interference with each other, reducing performance at many areas of cell edges. Because of this, small cell technology solutions result is users' devices being in a soft handover state often as user moves from one small cell coverage area to another, increasing the overhead of managing transitions. Furthermore, because they often have a small base station in each, they require backhaul methods from each instance, which is a costly method to deliver.

This has relegated small cells to be most suitable in very small facilities (usually less than 5000 m²).

Distributed antenna systems (DAS), in contrast, are exceptional at delivering balanced signal across medium and larger facilities.

Unlike small cell technology, a DAS acts like a single cell and does not require cellular-protocol handoffs when a user moves from one DAS antenna coverage area to another. DAS systems can combine radios with different power classes to optimize coverage, can be used to provide multiple-bearer paths to increase performance, and can carry multiple bands across multiple carriers to deliver multi-operator service within facilities.

Conventionally, DAS are completely transparent to end users on the system and are dependent on traditional baseband processors (called BBUs or BaseBand Units) and their surrounding control infrastructure to "Roam" users from one cell to another.

BBUs are the components that carry voice and/or data between a user's cellphone and the core cellular wireless network (e.g., ATT's network or Verizon's network). In some systems, the BBU may be a component of an eNodeB, which may also include a radio head.

Additionally, the conventional BBUs have no knowledge that they are on a DAS system, and thus they depend on the DAS to remain transparent, minimizing any extracurricular delays, and in many aspects maintaining its transparency.

Independently, the conventional DAS and BBU function to provide very important and very powerful capabilities.

Particularly, a DAS is a network of spatially separated Remote antenna Heads (RH), connected to a series of Base Stations (BS) through a series of Points Of Interface (POI) and a Combining-Splitting (CS) section. BS are connected to the POIs through an analog interface, which usually requires signal conditioning (attenuation). The series of RH is typically connected to the CS by means of optic fiber.

A DAS system allows collecting signals from multiple BS, belonging to different operators, and transmitting in different bands, to combine these signals, and to address them to the desired RH.

Therefore, DAS systems are useful to give coverage and capacity to areas with high UE density, such as stadiums, metro, or skyscrapers. A single/few rooms within the building can be used to host a large number of BS, and coverage can be provided to the whole building by means of the spatially distributed RH. The BS can be connected to the packet network through a standard Back-Haul (BH) interface.

Nowadays, BS are being split in two sections, BBU and Remote Radio Head (RRH): the BBU is in charge of generating and processing the digital baseband signals, while the RRH is in charge of converting the digital signals to analog ad to up-convert them to Radio Frequency (RF) and to amplify the signals. Moreover, with the evolution of general purpose processors, BBU are being implemented also as Software Defined Radio (SDR) solutions. This means that a software running on a general purpose processor is capable of implementing all the functions of a BS BBU. More than this, with increasing computational power, a number of BBU instances can be run on a single machine, thus implementing a BBU pool in a single physical machine.

A fast digital link transports FH signals to/from the different BBU instances from/to a series of RRH which can be spatially separated.

This evolution is leading to the implementation of the Cloud-RAN architecture that is the cloud computing-based architecture for Radio Access Networks. This is the proposed architecture for next generation cellular networks: according to it, BBUs will be centralized in large server farms, connected to data centers, and FH data will be transmitted to the different RRH through Metro Optical Networks.

However, the conventional DAS and BBU suffer drawbacks and deficiencies because they essentially ignore that each other exists.

Furthermore, it is pointed out that the use of optical links for communications by and between the base stations (BTS) is becoming increasingly common in 4G networks. On these optical link signals travel in digital, packaged according to the CPRI (Common Public Radio Interface) standard.

The CPRI standard, however, describes only the two lowest layers of the protocol stack: the physical layer (PHY) and the layer for channel access (data link). On top of these layers, there is currently no protocol that defines how the data stream is to be structured.

In this way, it can become difficult to interface DAS systems with BTS developed by different OEM (Original Equipment Manufacturing), using different methods and proprietary procedures for packaging of data.

Therefore, there is a clear need to bring these two entities (BBU and DAS) together into a single, integrated system that can gather intelligence information about the current DAS usage by users and the current system resources (e.g., BBU resources), and use that intelligence information to reallocate system resources to better serve the current users.

Document US 2010/296816 A1 discloses an apparatus and method for implementing a flexible distributed antenna system (DAS) head end. The flexible DAS head end includes an RF conditioning module configured to be connected to one or more base station transceiver (BTS) devices and one or more low-power RF modules that are also part of the flexible DAS head end. Document US 2014/243033 A1 discloses a distributed antenna system (DAS) comprising: first base station network interface unit that receives first downlink signals from first external device and converts them into first downlink data stream; second base station network interface unit that receives second downlink signals from second external device and them into second downlink data stream; first remote antenna unit communicatively coupled to first base station network interface unit that receives at least one of first downlink data stream and first downlink signal derived from first downlink data stream. Document WO 2014/048919 A1 discloses a first and a second interconnection unit comprising a respective first and a second communication interface, a first and a second electro-optical converter, and a multiplexing unit.

Document US 2014/031049 A1 discloses a wireless communications system comprising a baseband processing unit (BBU) pool including one or more baseband processing units (BBUs), and a plurality of remote radio heads (RRHs) connected to the BBU pool through a front-haul network.

Document US 2009/149221 A1 discloses a centralized base station system based on ATCA, comprising a main base station subsystem and one or more remote radio frequency subsystems.

### Disclosure of the Invention

The main aim of the present invention is to provide a system for the distribution of wireless signals in telecommunication networks, which is able to efficiently integrate the functionality of a Baseband Units (BBU) with the functionality of a distributed antenna system (DAS).

Another object of the present invention is to provide a system for the distribution of wireless signals in telecommunication networks, which allow to intelligently and dynamically allocating cellular resources (such as cell distribution, spectrum capacity, carrier aggregation) in a distributed antenna system (DAS), in order to provide consistent, balanced, and very high performance cellular capacity that corresponds to users' coverage needs. Another object of the present invention is to provide a system for the distribution of wireless signals in telecommunication networks which allows to overcome the mentioned drawbacks of the prior art within the ambit of a simple, rational, easy and effective to use as well as affordable solution.

The above mentioned objects are achieved by the present system for the distribution of wireless signals in telecommunication networks according to the characteristics described in claim 1.

### Brief Description of the Drawings

Other characteristics and advantages of the present invention will become better evident from the description of a preferred, but not exclusive embodiment of a system for the distribution of wireless signals in telecommunication networks, illustrated by way of an indicative, but not limitative example in the accompanying drawings in which:
Figure 1 is a block diagram illustrating the two main BTS and POI blocks of the system according to the invention integrated with the conventional functions of a Distributed Antenna System;
Figure 2 and in Figure 3 illustrate explanatory block diagrams schemes of the entire architecture of the system according to the invention;
Figure 4 illustrates more detailed diagram of the circuitry implemented on a PCI card of the system according to the invention;
Figure 5 illustrates the hardware architecture of a particular possible embodiment of a POI-CPRI Board of the system according to the invention;

### Embodiments of the Invention

With particular reference to such illustrations, globally indicated with reference number 1 is a system for the distribution of wireless signals in telecommunication networks, particularly for providing a baseband unit (BBU) functionally integrated with a distributed antenna system (DAS).

Particularly, the system 1 according to the invention provides greater flexibility, modularity and future-proof architectures, by implementing the following innovative features:
- integration into the system 1 of the functionality for the generation of the signal to be distributed;
- realization of a proprietary optical links based on a high speed CPRI/Ethernet standard;
- integration into the system 1 of all existing technologies (2G, 3G, 4G), by creating a framework that can handle even future technologies (5G).

In this way it is possible to design a solution for the realization of the base stations that is innovative from the economic point of view (cost reduction), from an engineering point of view (computational efficiency) and from the environmental point of view (efficiency and energy saving).

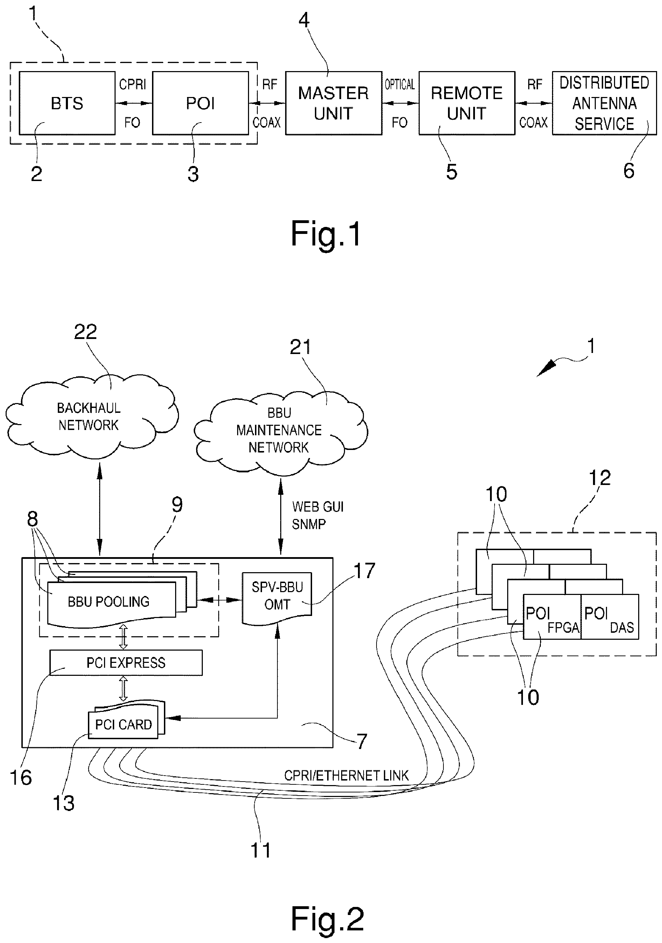

As shown schematically in Figure 1, the innovative features of the architecture of the new system 1 are related to the design and construction of the two blocks 2 and 3 closed in the dotted rectangle and related to the base station BTS (or BBU or eNodeB depending on the technology used, i.e. 2G, 3G, 4G) and the Point Of Interface POI of a DAS system.

As schematically shown in figure 1, the system 1 can be easily integrated into the known structure of a DAS.

Particularly, the system 1 according to the invention can be partially integrated with the DAS and operatively connected with the conventional master unit 4 of the DAS itself.

As known from the background art, the master unit 4 is connected through an optical fiber connection to a remote unit 5. The master unit 4 performs an RF-to-optical conversion and vice versa, while the remote unit 5 performs signal amplification and optical-to-RF conversion and vice versa. The remote unit 5 is further connected to a distributed antenna system 6 for the distribution of signals.

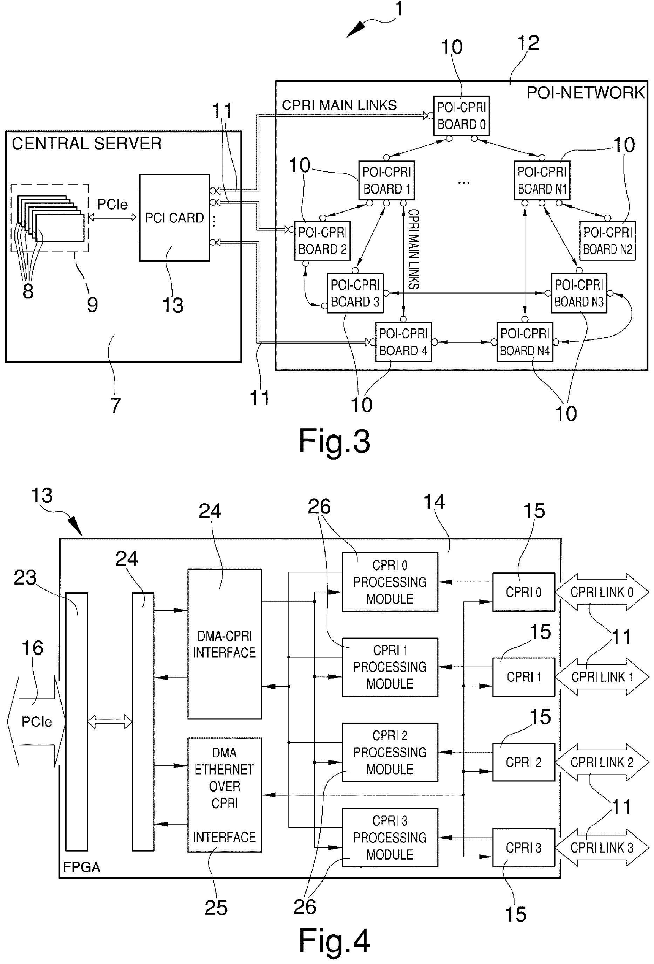

Figure 2 and in Figure 3 illustrate explanatory block diagrams schemes of the entire architecture of the system 1.

As it is possible to see, the system 1 provides an architecture composed of the following fundamental parts:
- at least a central server 7 provided with at least a baseband unit 8 (BBU) realized via a BBU pooling software 9;
- at least a point of interface unit 10 connected with a distributed antenna system (DAS) to distribute the signal received from the baseband unit 8 in areas with high density of users;
- at least an interface link 11 connected with said central server 7 and with said at least a point of interface unit 10.

Particularly, the system 1 comprises a point of interface network 12 provided with a plurality of said point of interface units 10 that interfaces with the central server 7 via the interface links 11 and which is connected with the DAS to distribute the signal received from the BBU 8 in areas with high density of users.

Furthermore, the interface link 11 preferably comprises a plurality of optical connecting links. The communication through the optical connecting links 11 is implemented by means of protocol of the CPRI and/or Ethernet type. Furthermore, the system 1 comprises a plurality of baseband unit 8 realized via a BBU pooling software 9 configured on the central server 7.

More particularly, the system 1 provides the possibility to realize on the central server 7 a set of BTS 8, called BBU-pool. The BBU pooling software 9 for the implementation of the BBU-pool is of the type of a software radio.

Preferably, the central server 7 is realized by means of at least a computer with CPU-INTEL architectures or the like.

The number of BBU 8 implemented on the central server 7 depends on the number of processors of the computer on the central server itself.

In addition, the central server 7 of the system 1 includes at least one electronic connection card 13 and at least one digital CPRI link (or an Ethernet link) between the BBU-pool 8 and the electronic connection card itself.

Preferably, the electronic connection card 13 is of the type of a PCI card. Conveniently, the PCI card 13 is equipped with an FPGA (Field Programmable Gate Array) chip 14 capable of ensuring high performance (in terms of clock rates used, power consumption, etc.)

Furthermore, the PCI card 13 comprises at least CPRI link 15 (or an Ethernet link).

The CPRI interface performs the transmission/reception on fiber of the Base band signal and implements the merging of CPRI and Ethernet data.

According to a possible embodiment, the PCI Card 13 is provided with four CPRI links 15 (or Ethernet links) connected to corresponding optical connecting links 11. However, this is a constraint of the current technology and, therefore, future developments may lead to enhanced connectors carrying more than four CPRI links 15.

Particularly, the CPRI links 15 on the PCI-Card 13 are of the type of CPRI Master links.

According to a preferred embodiment, the BBU-pooling software 9 interfaces with the PCI Card 13 through an interface unit 16 of the type of a PCI Express interface, and with another supervision software 17 that acts as supervision of central server 7 and POI-Network 12.

The optical connecting links 11 connect the PCI card 13 of the central server 7 with the point of interface unit 10 of the DAS.

Particularly, the point of interface units 10 are implemented by means of dedicated POI-CPRI boards.

The optical connecting links 11 are constituted by high-speed optical links with CPRI/Ethernet protocol.

The POI-CPRI boards 10 are implemented using FPGA boards 18, which allow both the management of the CPRI link 11 (or Ethernet link), both the implementation of re-programmable and re-configurable circuitry, such as digital filtering and adaptive modulation/demodulation of the signal. Particularly, the POI-Network 12 consists of several POI-CPRI boards 10 equipped with a plurality of ports 19 connected to respective CPRI link 11. Furthermore, the POI-CPRI boards 10 can be equipped also with a plurality of ports 20 connected to respective Ethernet link 11.

The POI-CPRI boards 10 are provided with CPRI slave interfaces and CPRI master interfaces.

Particularly, as schematically shown in figure 3, the POI-CPRI boards 10 are connected to the PCI card 13 through CPRI Slave interfaces and can be also interconnected each other through CPRI Master/Slave interfaces.

The type of the POI CPRI/Ethernet links of the POI-CPRI boards 10 is dynamically reconfigurable as a function of the fact that they must be of Master or Slave type.

This makes it possible to create a fully interconnected network between the various POI-CPRI boards 10 which has advantages in terms of routing, sustainability and redundancy of the optical connecting links 11 in case of malfunctions/loss of one or more links.

Further details concerning the following features are hereinafter described:
- BBU-Pooling software 9;
- PCI Card 13;
- POI-CPRI Board 10.

The BBU pooling software 9 realizes the virtualization of the BBU-pool 8 or eNodeB (eNB) system.

In this way the BBU-pool 8 (or eNB) is hardware independent (it does not require a dedicated hardware) but it can be installed on server machine scalable in terms of CPU power.

Depending on CPU power the BBU pooling is able to manage from one to tens of LTE 20MHz MIMO 2x2 carriers.

BBU pooling software 9 is configured, managed and monitored via a supervision software 17 that realizes the OMT (Operational and Maintenance Terminal) via a web based GUI and via a BBU maintenance network 21.

With the same web based GUI it is possible to configure, manage and monitor the POI-CPRI boards 10 up to the DAS platform interface.

The DAS platform itself is managed by a similar but separated web GUI to keep BBU-pool 8 and DAS platform independently manageable.

Through OMT web pages it is possible to manage the LTE datastream coming from operator backhaul network 22 to the I/Q drivers and from I/Q drivers to distribute the LTE data to the destination POI-CPRI boards 10 through CPRI (or Ethernet) links 11.

In this way on each POI-CPRI board 10 it is possible to generate the RF signal related to the desired band and sector, then this signal will drive the DAS.

This platform is flexible, fully configurable and perfectly fits the multiband/multioperator DAS platform.

Concerning the PCI card 13, it is preferably constituted by a FPGA card 14. Therefore the PCI card 13 is constituted by a software reprogrammable circuitry inserted within the central server 7 through a PCI Express interface 16 of the latest generation.

The PCI card 13 packs the stream of base-band data generated by the BBU pooling software 9 and received via the PCI Express interface 16, according to the CPRI/Ethernet standards, in order to interface to the POI-CPRI boards 10 of the POI-Network 12.

A more detailed diagram of the circuitry implemented on the PCI card is shown in Figure 4.

Particularly, The FPGA board 14 implement a PCI-Express communication interface 23.

Furthermore, the FPGA board 14 comprises a memory management unit 24 of the Direct Memory Access (DMA) type for managing memory accesses to/from the central server 7 memory and from/to the memory on the FPGA board 14. The FPGA board 14 further includes custom interfaces to align the format of the three different data interfaces and PCIe, DMA and CPRI, and other custom algorithms of signal processing to organize, optimize and tailored stream of data with respect to the POI-Network 12.

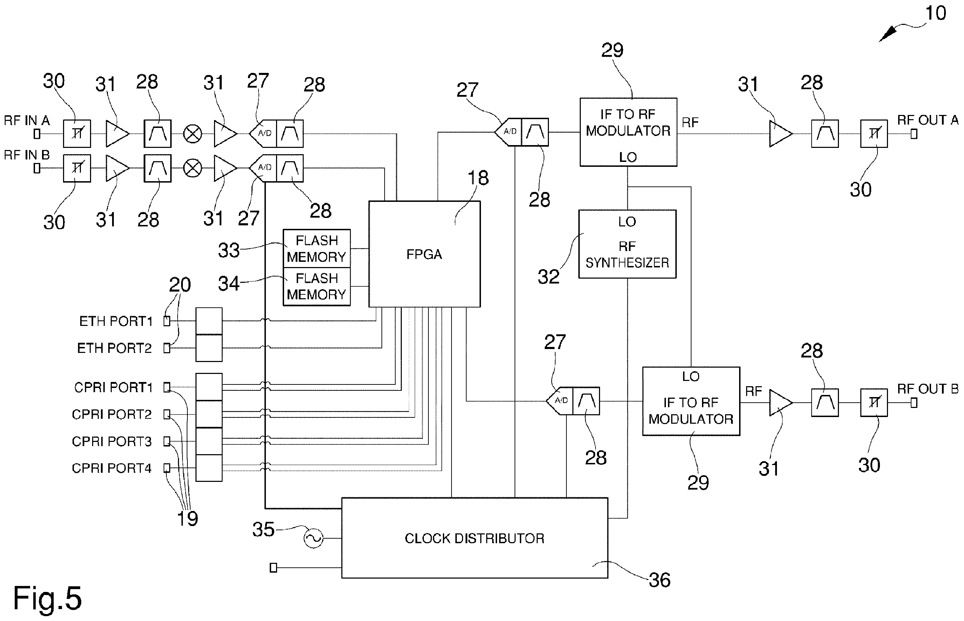

Finally, the FPGA board 14 comprises organization units 26 for organizing data according to the CPRI standard. Particularly, the organization units 26 performs AxC IQ data mapping, interleaving frame and synchronization management. The hardware architecture of a particular possible embodiment of a POI-CPRI Board 10 according to the invention is shown in detail in Figure 5.

Particularly, according to such particular embodiment, The POI-CPRI board 10 consists of:
- four SFP+ ports 19 for the four CPRI link;
- two 1-Gigabit Ethernet ports 20, one to provide a Wi-Fi type access by connecting an access-point and the other as a local Ethernet port for maintenance and debugging;
- components and circuitry for signal transmission in the Downlink path and Uplink path, including blocks 27 for the analog/digital conversion and digital/analog conversion, blocks 28 for filtering, IF/RF modulators 29, attenuators 30, amplifiers 31, RF synthesizer 32, flash memory 33, DDR memory 34, oscillators 35 and a Clock distributor 36;
- an FPGA board 18 with integrated hardware microprocessors.

Specifically, the FPGA board 18 performs the following functions:
- digital signal reception/transmission from the A/D converter and to the D/A converter;
- digital signal reception/transmission from CPRI Slave/Master interfaces;
- Master/Slave configuration of CPRI interfaces;
- routing from/to CPRI interface of the signal and of the Ethernet link encapsulated in the CPRI;
- programming of all the circuitry of the board;
- digital filtering;
- conversion from intermediate frequency to base-band and from base-band to intermediate frequency;
- various algorithms of signal processing;
- monitoring the functioning of all the devices mounted on the board;
- automatic alarm management;
- communication via Ethernet encapsulated in the CPRI links with the supervision of the Central Server software routines.

In practice it has been observed how the described invention achieves the intended objects.

Particularly, the realization of the BTS in software on the central server allows:
- cost savings for production operators;
- savings production materials and physical dimensions apparatus;
- energy saving;
- intercommunication between multiple BBU;
- use of a FPGA board for the management of the CPRI link high speed.

Furthermore, the realization of the specific digital and interconnected CPRI-POI boards allows:
- the communication between the various boards with optical CPRI links;
- the ability to reroute traffic dynamically;
- high flexibility and re-configurability of the POI network;
- re-programmability of the individual CPRI-POI board through the use of FPGA boards.

Furthermore, because the integrated BBU/DAS system operates as a finely tuned and single system, it can minimize the disadvantageous of consistent soft-handover states that typically occur in when users are traversing across numerous small cells, while maximizing the end user throughput at any point or points across the system.

Furthermore, the integrated BBU/DAS system allows to store, keep track of, and/or otherwise monitor the distribution of remote radios and antennas in the DAS, and may identify, monitor, and/or otherwise determine the end users' (e.g., cellphones) localizations in relation to each DAS radio/antenna.

Using this intelligence information, the system can dynamically optimize the allocation of available BBU resources to best serve the locations of these different user communities.

## Claims

1. System (1) for the distribution of wireless signals in telecommunication networks, configured for providing a baseband unit functionally integrated with a distributed antenna system, comprising:
- a central server (7) provided with a plurality of baseband units (8), wherein said baseband units (8) are realized via a BBU pooling software (9) configured for the virtualization of the baseband units (8);
**characterized in that** it comprises:
- a point of interface network (12) connected with said central server (7) via an interface link (11) and provided with a plurality of point of interface units (10), wherein said interface network (12) is connected with a distributed antenna system and configured to distribute the signal received from said plurality of baseband units (8) in areas with high density of users.

2. System (1) according to claim 1, **characterized in that** said interface link (11) comprises at least an optical connecting link.

3. System (1) according to one or more of the preceding claims, **characterized in that** said interface link (11) comprises a plurality of said optical connecting links.

4. System (1) according to one or more of the preceding claims, **characterized in that** said interface link (11) comprises a communication protocol of the CPRI and/or Ethernet type.

5. System (1) according to one or more of the preceding claims, **characterized in that** said central server (7) comprises at least one electronic connection card (13) connected to said at least a point of interface unit (10) of the distributed antenna system through said interface link (11).

6. System (1) according to claim 5, **characterized in that** said electronic connection card (13) is of the type of a PCI card.

7. System (1) according to one or more of the preceding claims 5 and 6, **characterized in that** said electronic connection card (13) comprises at least a FPGA chip (14).

8. System (1) according to one or more of the preceding claims from 5 to 7, **characterized in that** said electronic connection card (13) comprises at least an CPRI link (15) and/or at least an Ethernet link.

9. System (1) according to one or more of the preceding claims from 5 to 8, **characterized in that** said electronic connection card (13) comprises at least an organization units (26) for organizing data according to the CPRI standard.

10. System (1) according to one or more of the preceding claims from 5 to 9, **characterized in that** said electronic connection card (13) comprises at least a PCI-Express communication interface (23).

11. System (1) according to one or more of the preceding claims from 5 to 10, **characterized in that** said electronic connection card (13) comprises at least a memory management unit (24) for managing memory accesses to/from a memory of said central server (7) and from/to a memory of the electronic connection card (13).

12. System (1) according to one or more of the preceding claims from 5 to 11, **characterized in that** said central server (7) comprises at least an interface unit (16) of the type of a PCI Express interface operatively interposed between said at least a baseband unit (8) and said electronic connection card (13).

13. System (1) according to one or more of the preceding claims, **characterized in that** said point of interface unit (10) is implemented by means of at least a FPGA board (18).

14. System (1) according to one or more of the preceding claims, **characterized in that** said point of interface unit (10) comprises a plurality of ports (19, 20) connected to respective interface link (11).

15. System (1) according to one or more of the preceding claims, **characterized in that** said point of interface unit (10) comprises at least a CPRI slave interface and at least a CPRI master interface, wherein:
- said point of interface unit (10) is connected to said electronic connection card (13) through said CPRI slave interface;
- said point of interface unit (10) is connected with other point of interface units (10) through said CPRI master interface or through said CPRI slave interface.

16. System (1) according to one or more of the preceding claims, **characterized in that** said point of interface unit (10) comprises components and circuitry for signal transmission in the Downlink path and Uplink path, including blocks (27) for the analog/digital conversion and digital/analog conversion, blocks (28) for filtering, IF/RF modulators (29), attenuators (30), amplifiers (31), RF synthesizer (32), flash memory (33), DDR memory (34), oscillators (35) and a Clock distributor (36).

17. System (1) according to one or more of the preceding claims, **characterized in that** said BBU pooling software (9) comprises a supervision software (17) that realize an Operational and Maintenance Terminal, and a web based Graphic User Interface operatively connected with said supervision software (17).

## Patentansprüche

1. System (1) für die Verteilung von drahtlosen Signalen in Telekommunikationsnetzen, das für die Bereitstellung einer Funktionalität einer Basisbandeinheit ausgebildet ist, die mit einem verteilten Antennensystem integriert ist, umfassend:
- einen zentralen Server (7), der mit einer Vielzahl von Basisbandeinheiten (8) versehen ist, wobei die Basisbandeinheiten (8) über eine BBU-Pooling-Software (9) realisiert sind, die für die Virtualisierung der Basisbandeinheiten (8) ausgebildet ist;
**dadurch gekennzeichnet, dass** es umfasst:
- ein Schnittstellennetzwerk (12), das mit dem zentralen Server (7) über eine Schnittstellenverbindung (11) verbunden ist und mit einer Vielzahl von Point-of-Interface-Einheiten (10) versehen ist, wobei das Schnittstellennetzwerk (12) mit einem verteilten Antennensystem verbunden ist und ausgebildet ist, das von der Vielzahl von Basisbandeinheiten (8) empfangene Signal in Gebieten mit hoher Nutzerdichte zu verteilen.

2. System (1) nach Anspruch 1, **dadurch gekennzeichnet, dass** die Schnittstellenverbindung (11) mindestens eine optische Verbindungstrecke umfasst.

3. System (1) nach einem oder mehreren der vorhergehenden Ansprüche, **dadurch gekennzeichnet, dass** die Schnittstellenverbindung (11) eine Vielzahl der optischen Verbindungsstrecken umfasst.

4. System (1) nach einem oder mehreren der vorangehenden Ansprüche, **dadurch gekennzeichnet, dass** die Schnittstellenverbindung (11) ein Kommunikationsprotokoll vom Typ CPRI und/oder Ethernet umfasst.

5. System (1) nach einem oder mehreren der vorangehenden Ansprüche, **dadurch gekennzeichnet, dass** der zentrale Server (7) mindestens eine elektronische Verbindungskarte (13) umfasst, die über die Schnittstellenverbindung (11) mit mindestens einer Point-of-Interface-Einheit (10) des verteilten Antennensystems verbunden ist.

6. System (1) nach Anspruch 5, **dadurch gekennzeichnet, dass** die elektronische Verbindungskarte (13) von der Art einer PCI-Karte ist.

7. System (1) nach einem oder mehreren der vorhergehenden Ansprüche 5 und 6, **dadurch gekennzeichnet, dass** die elektronische Verbindungskarte (13) mindestens einen FPGA-Chip (14) umfasst.

8. System (1) nach einem oder mehreren der vorangehenden Ansprüche 5 bis 7, **dadurch gekennzeichnet, dass** die elektronische Verbindungskarte (13) mindestens eine CPRI-Verbindung (15) und/oder mindestens eine Ethernet-Verbindung umfasst.

9. System (1) nach einem oder mehreren der vorhergehenden Ansprüche 5 bis 8, **dadurch gekennzeichnet, dass** die elektronische Verbindungskarte (13) mindestens eine Organisationseinheit (26) zur Organisation von Daten nach dem CPRI-Standard umfasst.

10. System (1) nach einem oder mehreren der vorhergehenden Ansprüche 5 bis 9, **dadurch gekennzeichnet, dass** die elektronische Verbindungskarte (13) mindestens eine PCI-Express-Kommunikationsschnittstelle (23) umfasst.

11. System (1) nach einem oder mehreren der vorhergehenden Ansprüche 5 bis 10, **dadurch gekennzeichnet, dass** die elektronische Verbindungskarte (13) mindestens eine Speicherverwaltungseinheit (24) zur Verwaltung von Speicherzugriffen auf einen/von einem Speicher des zentralen Servers (7) und von einem/auf einen Speicher der elektronischen Verbindungskarte (13) umfasst.

12. System (1) nach einem oder mehreren der vorhergehenden Ansprüche 5 bis 11, **dadurch gekennzeichnet, dass** der zentrale Server (7) mindestens eine Schnittstelleneinheit (16) von der Art einer PCI-Express-Schnittstelle umfasst, die funktional zwischen der mindestens einen Basisbandeinheit (8) und der elektronischen Verbindungskarte (13) angeordnet ist.

13. System (1) nach einem oder mehreren der vorhergehenden Ansprüche, **dadurch gekennzeichnet, dass** die Point-of-Interface-Einheit (10) mittels mindestens einer FPGA-Platine (18) implementiert ist.

14. System (1) nach einem oder mehreren der vorhergehenden Ansprüche, **dadurch gekennzeichnet, dass** die Point-of-Interface-Einheit (10) eine Vielzahl von Anschlüssen (19, 20) umfasst, die mit der jeweiligen Schnittstellenverbindung (11) verbunden sind.

15. System (1) nach einem oder mehreren der vorhergehenden Ansprüche, **dadurch gekennzeichnet, dass** die Point-of-Interface-Einheit (10) mindestens eine CPRI-Slave-Schnittstelle und mindestens eine CPRI-Master-Schnittstelle umfasst, wobei:
- die Point-of-Interface-Einheit (10) über die CPRI-Slave-Schnittstelle mit der elektronischen Verbindungskarte (13) verbunden ist;
- die Point-of-Interface-Einheit (10) über die CPRI-Master-Schnittstelle oder über die CPRI-Slave-Schnittstelle mit anderen Point-of-Interface-Einheiten (10) verbunden ist.

16. System (1) nach einem oder mehreren der vorhergehenden Ansprüche, **dadurch gekennzeichnet, dass** die Point-of-Interface-Einheit (10) Komponenten und Schaltungen zur Signalübertragung im Downlink-Pfad und im Uplink-Pfad umfasst, einschließlich Blöcken (27) zur Analog/Digital-Wandlung und Digital/Analog-Wandlung, Blöcken (28) zur Filterung, IF/RF-Modulatoren (29), Dämpfungsgliedern (30), Verstärkern (31), RF-Synthesizer (32), Flash-Speicher (33), DDR-Speicher (34), Oszillatoren (35) und einem Taktverteiler (36).

17. System (1) nach einem oder mehreren der vorhergehenden Ansprüche, **dadurch gekennzeichnet, dass** die BBU-Pooling-Software (9) eine Überwachungssoftware (17), die ein Betriebs- und Wartungsterminal realisiert, und eine webbasierte grafische Benutzeroberfläche umfasst, die funktional mit der Überwachungssoftware (17) verbunden ist.

## Revendications

1. - Système (1) pour la distribution de signaux sans fil dans des réseaux de télécommunication, configuré pour fournir une unité de bande de base intégrée de manière fonctionnelle à un système d'antennes distribuées, comprenant :
- un serveur central (7) ayant une pluralité d'unités de bande de base, BBU, (8), lesdites unités de bande de base (8) étant réalisées par l'intermédiaire d'un logiciel de regroupement de BBU (9) configuré pour la virtualisation des unités de bande de base (8) ;
**caractérisé par le fait qu'**il comprend :
- un réseau de points d'interface (12) connecté audit serveur central (7) par l'intermédiaire d'une liaison d'interface (11) et comportant une pluralité d'unités de point d'interface (10), ledit réseau d'interface (12) étant connecté à un système d'antennes distribuées et configuré pour distribuer le signal reçu en provenance de ladite pluralité d'unités de bande de base (8) dans des zones à forte densité d'utilisateurs.

2. - Système (1) selon la revendication 1, **caractérisé par le fait que** ladite liaison d'interface (11) comprend au moins une liaison de connexion optique.

3. - Système (1) selon une ou plusieurs des revendications précédentes, **caractérisé par le fait que** ladite liaison d'interface (11) comprend une pluralité desdites liaisons de connexion optique.

4. - Système (1) selon une ou plusieurs des revendications précédentes, **caractérisé par le fait que** ladite liaison d'interface (11) comprend un protocole de communication du type CPRI et/ou Ethernet.

5. - Système (1) selon une ou plusieurs des revendications précédentes, **caractérisé par le fait que** ledit serveur central (7) comprend au moins une carte de connexion électronique (13) connectée à ladite au moins une unité de point d'interface (10) du système d'antennes distribuées par l'intermédiaire de ladite liaison d'interface (11).

6. - Système (1) selon la revendication 5, **caractérisé par le fait que** ladite carte de connexion électronique (13) est du type carte PCI.

7. - Système (1) selon une ou plusieurs des revendications précédentes 5 et 6, **caractérisé par le fait que** ladite carte de connexion électronique (13) comprend au moins une puce FPGA (14) .

8. - Système (1) selon une ou plusieurs des revendications précédentes 5 à 7, **caractérisé par le fait que** ladite carte de connexion électronique (13) comprend au moins une liaison CPRI (15) et/ou au moins une liaison Ethernet.

9. - Système (1) selon une ou plusieurs des revendications précédentes 5 à 8, **caractérisé par le fait que** ladite carte de connexion électronique (13) comprend au moins une unité d'organisation (26) pour organiser des données selon la norme CPRI.

10. - Système (1) selon une ou plusieurs des revendications précédentes 5 à 9, **caractérisé par le fait que** ladite carte de connexion électronique (13) comprend au moins une interface de communication PCI-Express (23).

11. - Système (1) selon une ou plusieurs des revendications précédentes 5 à 10, **caractérisé par le fait que** ladite carte de connexion électronique (13) comprend au moins une unité de gestion de mémoire (24) pour gérer des accès mémoire vers/depuis une mémoire dudit serveur central (7) et depuis/vers une mémoire de la carte de connexion électronique (13) .

12. - Système (1) selon une ou plusieurs des revendications précédentes 5 à 11, **caractérisé par le fait que** ledit serveur central (7) comprend au moins une unité d'interface (16) du type interface PCI Express interposée de manière fonctionnelle entre ladite au moins une unité de bande de base (8) et ladite carte de connexion électronique (13).

13. - Système (1) selon une ou plusieurs des revendications précédentes, **caractérisé par le fait que** ladite unité de point d'interface (10) est mise en œuvre au moyen d'au moins une carte FPGA (18).

14. - Système (1) selon une ou plusieurs des revendications précédentes, **caractérisé par le fait que** ladite unité de point d'interface (10) comprend une pluralité de ports (19, 20) connectés à une liaison d'interface respective (11).

15. - Système (1) selon une ou plusieurs des revendications précédentes, **caractérisé par le fait que** ladite unité de point d'interface (10) comprend au moins une interface esclave CPRI et au moins une interface maître CPRI, dans lequel :
- ladite unité de point d'interface (10) est connectée à ladite carte de connexion électronique (13) par l'intermédiaire de ladite interface esclave CPRI ;
- ladite unité de point d'interface (10) est connectée à d'autres unités de point d'interface (10) par l'intermédiaire de ladite interface maître CPRI ou par l'intermédiaire de ladite interface esclave CPRI.

16. - Système (1) selon une ou plusieurs des revendications précédentes, **caractérisé par le fait que** ladite unité de point d'interface (10) comprend des composants et des circuits pour une transmission de signal dans le chemin de liaison descendante et le chemin de liaison montante, comprenant des blocs (27) pour la conversion analogique/numérique et la conversion numérique/analogique, des blocs (28) pour le filtrage, des modulateurs IF/RF (29), des atténuateurs (30), des amplificateurs (31), un synthétiseur RF (32), une mémoire flash (33), une mémoire DDR (34), des oscillateurs (35) et un distributeur d'horloge (36).

17. - Système (1) selon une ou plusieurs des revendications précédentes, **caractérisé par le fait que** ledit logiciel de regroupement de BBU (9) comprend un logiciel de supervision (17) qui réalise un terminal d'exploitation et de maintenance, et une interface utilisateur graphique basée sur le web connectée de manière fonctionnelle audit logiciel de supervision (17).
